# EUROPÄISCHE PATENTSCHRIFT

(11) **EP 3 205 517 B1**
(45) Veröffentlichungstag und Bekanntmachung des Hinweises auf die Patenterteilung: **22.08.2018**
(21) Anmeldenummer: 16204909.2
(22) Anmeldetag: 19.12.2016
(51) Int. Cl.: B60C 11/16, B60C 19/00, B60Q 1/32

(54) **EINBAUELEMENT FÜR EINEN FAHRZEUGLUFTREIFEN ZUR VERBESSERUNG DER FAHRZEUGSICHTBARKEIT**
INSERT FOR A PNEUMATIC VEHICLE TYRE FOR IMPROVING VEHICLE VISIBILITY
ÉLÉMENT ENCASTRÉ POUR UN PNEUMATIQUE DE VÉHICULE DESTINÉ À AMÉLIORER LA VISIBILITÉ DE VÉHICULE

(30) Priorität: 15.02.2016 DE 102016202246
(43) Veröffentlichungstag der Anmeldung: 16.08.2017
(73) Patentinhaber: Continental Reifen Deutschland GmbH, 30165 Hannover (DE)
(72) Erfinder: Kendziorra, Norbert, 30827 Garbsen (DE)
(74) Vertreter: Finger, Karsten

(56) Entgegenhaltungen:
- WO-A2-2006/138137
- JP-A- H01 103 502
- JP-A- 2005 343 393

## Beschreibung

Die Erfindung betrifft ein Einbauelement für einen Fahrzeugluftreifen zur Verbesserung der Fahrzeugsichtbarkeit, welches eine Leuchtdiode und einen radial außerhalb der Leuchtdiode angeordneten lichtdurchlässigen Abdeckkörper aufweist und im Lauftreifen eines Fahrzeugluftreifens eingebettet ist, sodass das Licht der Leuchtdiode bei Sicht auf den Laufstreifen erkennbar ist.

Um die Sichtbarkeit von Fahrzeugen zu verbessern und damit die Verkehrssicherheit zu erhöhen, ist es bekannt, an Fahrzeugreifen leuchtende Einbauelemente anzubringen.

Ein Einbauelement der eingangs genannten Art ist beispielsweise aus der JP 1103502 A bekannt. Das Einbauelement weist ein mit einem Abdeckkörper verschlossenes Gehäuse auf, in welchem eine Leuchtdiode angeordnet ist. Zur Spannungsversorgung können beispielsweise eine an der Radkappe oder an der Felge fixierte Batterie oder ein Stromgenerator mit einer Spule und einem Drehmagneten eingesetzt werden.

Aus der US 2006/0062008 A1 ist eine am Reifenventil eines Fahrzeugluftreifens angeordnete Leuchtdiode bekannt, welche mit mehreren Batterien in einem gemeinsamen Gehäuse untergebracht ist.

Ein an einer Seitenwand eines Fahrzeugluftreifens angeordnetes leuchtendes Einbauelement ist aus der US 2008/0105345 A1 bekannt. Das Einbauelement weist eine Faseroptik auf, welche vorzugsweise in eine an der Seitenwand vorgesehene Vertiefung eingesetzt ist. Weitere an Fahrzeugluftreifen angeordnete leuchtende Einbauelemente, gemäss Oberbegriff von Anspruch 1, sind aus der JP 2007210378 A und der WO 2006/138137 A2 bekannt.

Die bekannten Einbauelemente weisen eine mangelhafte bzw. unzureichende mechanische Belastbarkeit auf und lassen sich zudem nicht auf eine dauerhaltbare Weise einbauen. Die Techniken zur Befestigung der bekannten Einbauelemente erfordern zudem aufwändige Verfahren und/oder Anlagen, sodass deren Einbau in Fahrzeugreifen mit relativ hohem Kosten- und Zeitaufwand verbunden ist. Aus diesen Gründen wurden die bekannten Einbauelemente bislang nicht realisiert.

Der Erfindung liegt daher die Aufgabe zugrunde, ein Einbauelement der eingangs genannten Art, welches den mechanische Belastungen im Fahrbetrieb eines Fahrzeugluftreifens standhält sowie auf einfache Weise in den Reifen einbaubar ist, zur Verfügung zu stellen.

Die gestellte Aufgabe wird erfindungsgemäß dadurch gelöst, dass das Einbauelement ein in den Laufstreifen eingesetzter Spike ist, welcher zumindest einen Einsatz, welcher die Leuchtdiode und den lichtdurchlässigem Abdeckkörper aufweist, enthält.

Durch den Einbau der Leuchtdiode in einen Spike ist diese von dem aus Hartmetall gefertigten Spikekörper umgeben, sodass die Leuchtdiode vor den im Fahrbetrieb auftretenden mechanischen Beanspruchungen besonders effektiv geschützt ist. Vorteilhafter Weise gehören Techniken zur Befestigung von Spikes zum ausgereiften Stand der Technik, sodass eine sehr hohe mechanischen Belastbarkeit sichergestellt ist.

Auf besonders einfache Weise lässt sich der Einsatz in einer den Spike durchsetzenden oder im Spike ausgebildeten Aussparung anordnen.

Bei einer bevorzugten Ausführung der Erfindung ist der Abdeckkörper ein langgestreckter Bauteil, an an dessen einem Ende die Leuchtdiode angeordnet ist. Für einen besonders guten Halt der Leuchtdiode wird diese am Abdeckkörpers angeklebt.

Für eine besonders einfache Spannungsversorgung der Leuchtdiode ist es günstig, wenn die elektrischen Anschlüsse der Leuchtdiode am radial inneren Ende der Aussparung aus dem Spike herausragen.

Bei einer bevorzugten Ausführungsform der Erfindung ist der Abdeckkörper aus Kunststoff, insbesondere aus Polymethylmethacrylat, gefertigt. Polymethylmethacrylat zeichnet sich durch eine hohe mechanische Beständigkeit aus und weist ferner eine hohe Lichtdurchlässigkeit auf, sodass dieser Kunststoff ideal als Material für den Abdeckkörper geeignet ist.

Besonders einfach lässt sich ein Einsatz im Spike positionieren, dessen Abdeckkörper als langgestreckter Zylinder ausgeführt ist. Für eine besonders gute Sichtbarkeit des LEDs ist es von Vorteil, wenn der Abdeckkörper kegelstumpfförmig oder halb- kegelstumpfförmig gestaltet ist und vorzugsweise derart im Spike eingebaut ist, dass sich die Querschnittsfläche des Abdeckkörpers zur Außenseite des Spikes vergrößert.

Zur Verbesserung der Sichtbarkeit sind bei einer bevorzugten Ausführungsform der Erfindung zumindest zwei Einsätze im Spike vorgesehen.

Für eine einfache Fertigung von mit Einsätzen gemäß der Erfindung versehenen Spikes ist es von Vorteil, wenn die Einsätze übereinstimmend ausgeführt sind und bezüglich des Spikepins symmetrisch zueinander angeordnet sind.

Vorteilhafter Weise können die Spikes mit verschiedenfarbig leuchtenden Leuchtdioden in den Einsätzen ausgestattet werden, wobei die verschiedenen Farben unterschiedliche Warnfunktionen erfüllen können. Bei Einsatzfahrzeugen werden vorzugsweise Einsätze mit blau leuchtenden LEDs verwendet, zur Anzeige von Bremsvorgängen vorzugsweise Einsätze mit rot leuchtenden LEDs und bei Baustellenfahrzeugen beispielsweise Einsätze mit gelb leuchtenden LEDs.

Die Erfindung betrifft ferner einen Fahrzeugluftreifen, welcher im Laufstreifen zumindest einen erfindungsgemäß ausgeführten Spike enthält.

Weitere Merkmale, Vorteile und Einzelheiten der Erfindung werden nun anhand der Zeichnung, welche schematisch Ausführungsbeispiele der Erfindung darstellt, näher beschrieben. Dabei zeigen
Fig. 1 eine Schrägansicht eines Spikes mit einer Ausführungsvariante gemäß der Erfindung,
Fig. 1a eine Ansicht eines Einsatzes für einen Spike gemäß Fig. 1,
Fig. 1b eine Seitenansicht des Spikes aus Fig. 1
Fig. 2 eine Schrägansicht eines Spikes mit einer weiteren Ausführungsvariante gemäß der Erfindung,
Fig. 2a eine Ansicht eines Einsatzes für einen Spike gemäß Fig. 2 und
Fig. 2b eine Seitenansicht des Spikes aus Fig. 2.

Wie an sich bekannt werden Spikes in Laufstreifen für Winterreifen, welche vorzugsweise für Personenkraftwagen, Vans oder Light-Trucks vorgesehene Reifen sind, eingesetzt. Mittels eines "Post-Cure-Verfahrens", wie es beispielsweise in der DE 10 2010 017 442 offenbart ist, kann eine besonders gute Haltbarkeit der Spikes im Laufstreifen gewährleistet werden.

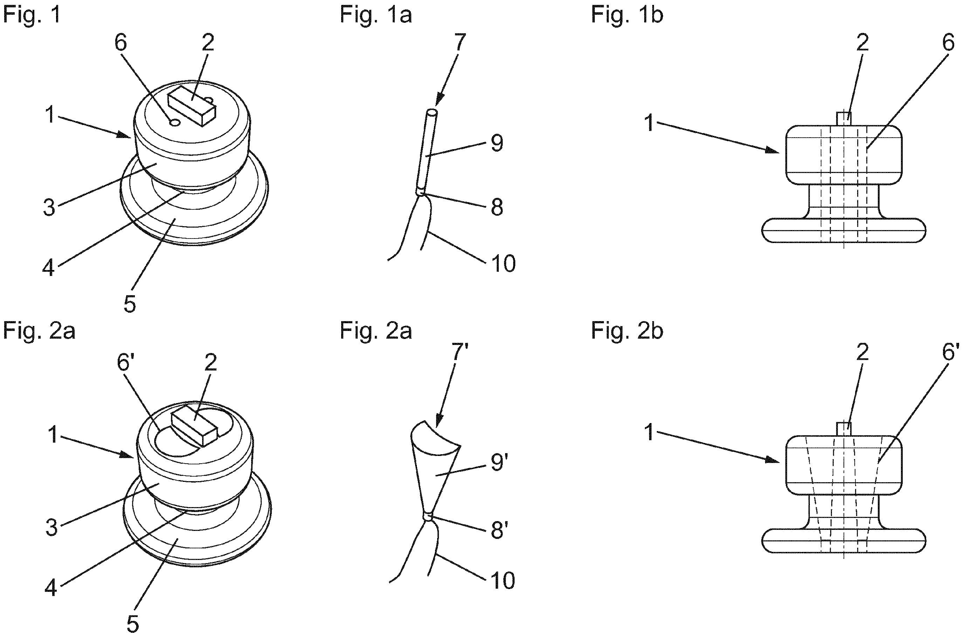

Die in Fig. 1 und Fig. 2 gezeigten Spikes weisen jeweils einen Spikekörper 1 und einen insbesondere in an sich bekannter Weise gestalteten, im Spikekörper 1 verankerten Spikepin 2 auf. Der Spikekörper 1 setzt sich aus einem Oberflansch 3, einen Mittelteil 4 und einem Fußflansch 5 zusammen, welche bei der gezeigten Ausführung jeweils eine rotationssymmetrische Geometrie aufweisen, wobei der Mittelteil 4 von sämtlichen Teilen des Spikekörpers 1 den kleinsten und der Fußflansch 5 den größten Durchmesser besitzt.

Bei der in Fig. 1 gezeigten Ausführungsvariante sind im Spikekörper 1 zwei übereinstimmend ausgeführte, sich jeweils parallel zur Längsachse des Spikes erstreckende, im Querschnitt kreisförmige Aussparungen 6 ausgebildet. Wie in Fig. 1b angedeutet, erstrecken sich die beiden Aussparungen 6 jeweils durch den gesamten Spikekörper 1 und sind bezüglich des Spikepins 2 symmetrisch zueinander angeordnet. In jede Aussparung 6 ist ein gemäß Fig. 1a ausgeführter Einsatz 7 eingesetzt, welcher eine mit den Aussparungen 6 korrelierende Geometrie aufweist. Der Einsatz 7 setzt sich aus einem langgestreckten Abdeckkörper 9 und einer an einem der Enden des Abdeckkörpers 9 angeordneten, insbesondere angeklebten, Leuchtdiode 8 zusammen (Fig. 1a). Der Abdeckkörper 9 besteht aus einem lichtdurchlässigen, vorzugsweise transparenten, Kunststoff, beispielsweise aus PMMA (Polymethylmethacrylat, "Plexiglas"). Die Leuchtdiode 8 besitzt zwei elektrische Anschlüssen 10, welche bei eingesetztem Einsatz 7 am radial inneren Ende der Aussparung 6 aus dem Spikekörper 1 herausragen.

Bei der in Fig. 2 gezeigten Ausführungsvariante weist der Spikekörper 1 zwei jeweils halbkegelstumpfförmig ausgebildete Aussparungen 6' auf, welche, wie insbesondere auch Fig. 2b zeigt, hinsichtlich ihrer Orientierung im Spikekörper 1 und ihrer Orientierung gegenüber dem Spikepin 2 übereinstimmend zu den Aussparungen 6 der Fig. 1 ausgeführt sind. Die halb-kegelstumpfförmigen Aussparungen 6' sind dabei jeweils derart orientiert, dass sich die Grundfläche des zugrundliegenden Kegelstumpfes an der Oberseite des Oberflansches 3 des Spikekörpers 1 befindet. In jede Aussparung 6' ist ein mit der Geometrie der Aussparung 6' korrelierend ausgeführter Einsatz 7' (Fig. 2a) eingesetzt. Der Einsatz 7' setzt sich aus einem langgestreckten lichtdurchlässigen, vorzugsweise transparenten, Abdeckkörper 9' und einer übereinstimmend zur Leuchtdiode 8 (Fig. 1) ausgeführten Leuchtdiode 8' mit elektrischen Anschlüssen 10' zusammen. Entsprechend der Geometrie der Aussparung 6' vergrößerst sich die Querschnittsfläche des Abdeckkörper 9' zur Oberseite des Spikekörpers 1. Der Abdeckkörper 9' ist aus einem lichtdurchlässigen, vorzugsweise transparenten, Kunststoff, wie oben erwähnt, gefertigt.

Es gibt mehrere Möglichkeiten, die Spannungsversorgung der in den Spikes eingebauten Leuchtdioden 8, 8' sicherzustellen. Beispielsweise kann mittels einer an der Felge angeordneten Batterie und einer entsprechenden elektrisch leitenden Verbindung zu den elektrischen Anschlüssen 10, welche beispielsweise eine durch den Gürtelverband kanalartige verlaufende Durchführung umfasst, die elektrische Spannung zur Verfügung gestellt werden.

Ferner bestehen unterschiedliche Möglichkeiten der "Energieernte" ("Energy-Harvesting"). Beispielsweise kann basierend auf dem piezoelektrischen Effekt aus den beim Fahren stattfindenden Vibrationen und Verformungen des Reifens mittels im Laufstreifen, vorzugsweise direkt unterhalb des Spikes, integrierten piezoelektrischen Materialien, wie beispielsweise piezoelektrischen Keramikfasern, Strom erzeugt werden. Eine weitere Möglichkeit der Energieernte besteht im Einsatz von unter den Spikes angeordneten elektromagnetischen Spulen. Zur Energiespeicherung können entsprechende Kondensatoren an einer geeigneten Stellen am Reifen angebracht oder im Lauftreifen integriert werden.

Bei weiteren Ausführungsvarianten sind mehr als zwei Einsätze oder nur ein Einsatz pro Spike vorgesehen. Die geometrische Gestalt und die Anzahl der Einsätze kann in Abhängigkeit von der jeweiligen Spikegeometrie variiert werden. Ferner können die in einem Spike vorgesehenen Einsätze eine voneinander abweichende Gestalt aufweisen. Die Einsätze können bezüglich des Spikepins 2 auch asymmetrisch angeordnet sein.

Spikes gemäß der Erfindung können zu einer Verbesserung der Fahrzeugsichtbarkeit und der Verkehrssicherheit beitragen. Insbesondere können LEDs verschiedener Farben für unterschiedliche Warnfunktionen eingesetzt werden. So ist es von Vorteil, Spikes in Laufstreifen von Reifen, welche für Baustellenfahrzeuge vorgesehen sind, mit gelbleuchtenden LEDs auszustatten. Blauleuchtende LEDs sind insbesondere zur Unterstützung der Warnfunktion von Einsatzfahrzeugen geeignet. Die Verwendung von rotleuchtenden LEDs ist insbesondere zu besseren Sichtbarkeit von Bremsvorgängen der Fahrzeuge von Vorteil.

### Bezugsziffernliste

- 1: Spikekörper
- 2: Spikepin
- 3: Oberflansch
- 4: Mittelteil
- 5: Fußflansch
- 6,6': Aussparung
- 7,7': Einsatz
- 8,8': Leuchtdiode
- 9,9': Abdeckkörper
- 10: elektrische Anschlüsse

## Patentansprüche

1. Einbauelement für einen Fahrzeugluftreifen zur Verbesserung der Fahrzeugsichtbarkeit, welches eine Leuchtdiode (8, 8') und einen radial außerhalb der Leuchtdiode (8, 8') angeordneten lichtdurchlässigen Abdeckkörper (9, 9') aufweist und im Lauftreifen eines Fahrzeugluftreifens eingebettet ist, sodass das Licht der Leuchtdiode (8, 8') bei Sicht auf den Laufstreifen erkennbar ist, **dadurch gekennzeichnet,**
**dass** das Einbauelement ein in den Laufstreifen eingesetzter Spike ist, welcher zumindest einen Einsatz (7, 7'), welcher die Leuchtdiode (8, 8') und den lichtdurchlässigen Abdeckkörper (9, 9') aufweist, enthält.

2. Einbauelement nach Anspruch 1, **dadurch gekennzeichnet, dass** der Einsatz (7, 7') in einer den Spike durchsetzenden oder im Spike ausgebildeten Aussparung (6, 6') angeordnet ist.

3. Einbauelement nach Anspruch 1 oder 2, **dadurch gekennzeichnet, dass** der Abdeckkörper (9, 9') ein langgestreckter Bauteil ist, an dessen einem Ende die Leuchtdiode (8, 8') angeordnet ist.

4. Einbauelement nach einem der Ansprüche 1 bis 3, **dadurch gekennzeichnet, dass** die Leuchtdiode (8, 8') am Abdeckkörper (9, 9') angeklebt ist.

5. Einbauelement nach einem der Anspruch 1 bis 4, **dadurch gekennzeichnet, dass** die elektrischen Anschlüsse (10) der Leuchtdiode (8, 8') am radial inneren Ende der Aussparung (6, 6') aus dem Spike herausragen.

6. Einbauelement nach einem der Ansprüche 1 bis 5, **dadurch gekennzeichnet, dass** der Abdeckkörper (9, 9') aus Kunststoff, insbesondere aus Polymethylmethacrylat, besteht.

7. Einbauelement nach einem der Ansprüche 1 bis 6, **dadurch gekennzeichnet, dass** der Abdeckkörper (9) als langgestreckter Zylinder ausgeführt ist.

8. Einbauelement nach einem der Ansprüche 1 bis 6, **dadurch gekennzeichnet, dass** der Abdeckkörper (9') kegelstumpfartig oder halb- kegelstumpfförmig ausgeführt ist.

9. Einbauelement nach Anspruch 8, **dadurch gekennzeichnet, dass** der Einsatz (7, 7') derart im Spike positioniert ist, dass sich die Querschnittsfläche des Abdeckkörpers (9') zur Oberseite des Spikes (1) vergrößert.

10. Einbauelement nach einem der Ansprüche 1 bis 9, **dadurch gekennzeichnet, dass** im Spike zumindest zwei Einsätze (7, 7') enthalten sind.

11. Einbauelement nach Anspruch 10, **dadurch gekennzeichnet, dass** die Einsätze (7, 7') übereinstimmend ausgeführt sind und bezüglich des Spikepins (2) symmetrisch zueinander angeordnet sind.

12. Einbauelement nach einem der Ansprüche 1 bis 11, **dadurch gekennzeichnet, dass** die Leuchtdiode (8, 8') blaues Licht entsendet.

13. Einbauelement nach einem der Ansprüche 1 bis 11, **dadurch gekennzeichnet, dass** die Leuchtdiode (8, 8') rotes Licht entsendet.

14. Einbauelement nach einem der Ansprüche 1 bis 11, **dadurch gekennzeichnet, dass** die Leuchtdiode (8, 8') gelbes Licht entsendet.

15. Fahrzeugluftreifen, welcher im Laufstreifen zumindest einen Spike gemäß einem oder mehreren der Ansprüche 1 bis 14 enthält.

## Claims

1. Installation element for a pneumatic vehicle tyre for improving vehicle visibility, which installation element has a light-emitting diode (8, 8') and a transparent covering body (9, 9') which is arranged radially outside the light-emitting diode (8, 8'), and which installation element is embedded in the tread of a pneumatic vehicle tyre, so that the light of the light-emitting diode (8, 8') can be identified when looking at the tread,
**characterized**
**in that** the installation element is a spike which is inserted into the tread and which contains at least one insert (7, 7') which comprises the light-emitting diode (8, 8') and the transparent covering body (9, 9').

2. Installation element according to Claim 1, **characterized in that** the insert (7, 7') is arranged in a cutout (6, 6') which passes through the spike or is formed in the spike.

3. Installation element according to Claim 1 or 2, **characterized in that** the covering body (9, 9') is an elongate component, the light-emitting diode (8, 8') being arranged at one end of the said elongate component.

4. Installation element according to one of Claims 1 to 3, **characterized in that** the light-emitting diode (8, 8') is adhesively bonded to the covering body (9, 9').

5. Installation element according to one of Claims 1 to 4, **characterized in that** the electrical connections (10) of the light-emitting diode (8, 8') protrude out of the spike at the radially inner end of the cutout (6, 6').

6. Installation element according to one of Claims 1 to 5, **characterized in that** the covering body (9, 9') is composed of plastic, in particular of polymethyl methacrylate.

7. Installation element according to one of Claims 1 to 6, **characterized in that** the covering body (9) is designed as an elongate cylinder.

8. Installation element according to one of Claims 1 to 6, **characterized in that** the covering body (9') is designed in the form of a truncated cone or in the shape of half a truncated cone.

9. Installation element according to Claim 8, **characterized in that** the insert (7, 7') is positioned in the spike in such a way that the cross-sectional area of the covering body (9') in relation to the top side of the spike (1) is increased in size.

10. Installation element according to one of Claims 1 to 9, **characterized in that** at least two inserts (7, 7') are contained in the spike.

11. Installation element according to Claim 10, **characterized in that** the inserts (7, 7') are designed in a corresponding manner and are arranged symmetrically in relation to one another with respect to the spike pin (2).

12. Installation element according to one of Claims 1 to 11, **characterized in that** the light-emitting diode (8, 8') emits blue light.

13. Installation element according to one of Claims 1 to 11, **characterized in that** the light-emitting diode (8, 8') emits red light.

14. Installation element according to one of Claims 1 to 11, **characterized in that** the light-emitting diode (8, 8') emits yellow light.

15. Pneumatic vehicle tyre which, in the tread, contains at least one spike according to one or more of Claims 1 to 14.

## Revendications

1. Elément encastré destiné à un pneumatique de véhicule permettant d'améliorer la visibilité du véhicule, comportant une diode électroluminescente (8, 8') et un corps de recouvrement translucide (9, 9') disposé radialement à l'extérieur de la diode électroluminescente (8, 8') et encastré dans la bande de roulement d'un pneumatique de véhicule de manière à ce que la lumière de la diode électroluminescente (8, 8') soit visible sur la bande de roulement,
**caractérisé en ce que** l'élément encastré est une pointe insérée dans la bande de roulement contenant au moins un insert (7, 7') qui comporte la diode électroluminescente (8, 8') et le corps de recouvrement translucide (9, 9').

2. Elément encastré selon la revendication 1, **caractérisé en ce que** l'insert (7, 7') est disposé dans un évidement (6, 6') traversant la pointe ou ménagé dans la pointe.

3. Elément encastré selon la revendication 1 ou 2, **caractérisé en ce que** le corps de recouvrement (9, 9') est un composant allongé à l'extrémité duquel est disposée la diode électroluminescente.

4. Elément encastré selon l'une des revendications 1 à 3, **caractérisé en ce que** la diode électroluminescente (8, 8') est collée au corps de recouvrement (9, 9').

5. Elément encastré selon l'une des revendications 1 à 4, **caractérisé en ce que** les bornes électriques (10) de la diode électroluminescente (8, 8') font saillie hors de la pointe à l'extrémité radialement intérieure de l'évidement (6, 6').

6. Elément encastré selon l'une des revendications 1 à 5, **caractérisé en ce que** le corps de recouvrement (9, 9') est constitué de matière plastique, en particulier de polyméthacrylate de méthyle.

7. Elément encastré selon l'une des revendications 1 à 6, **caractérisé en ce que** le corps de recouvrement (9) est réalisé sous la forme d'un cylindre allongé.

8. Elément encastré selon l'une des revendications 1 à 6, **caractérisé en ce que** le corps de recouvrement (9') est réalisé sous forme tronconique ou semi-conique.

9. Elément encastré selon la revendication 8, **caractérisé en ce que** l'insert (7, 7') est positionné dans la pointe de manière à ce que la surface de la section transversale du corps de recouvrement (9') augmente vers la partie supérieure de la pointe (1).

10. Elément encastré selon l'une des revendications 1 à 9, **caractérisé en ce qu'**au moins deux inserts (7, 7') sont présents dans la pointe.

11. Elément encastré selon la revendication 10, **caractérisé en ce que** les inserts (7, 7') sont réalisés de manière identique et sont disposés symétriquement l'un de l'autre par rapport à l'extrémité de la pointe (2) .

12. Elément encastré selon l'une des revendications 1 à 11, **caractérisé en ce que** la diode électroluminescente (8, 8') émet de la lumière bleue.

13. Elément encastré selon l'une des revendications 1 à 11, **caractérisé en ce que** la diode électroluminescente (8, 8') émet de la lumière rouge.

14. Elément encastré selon l'une des revendications 1 à 11, **caractérisé en ce que** la diode électroluminescente (8, 8') émet de la lumière verte.

15. Pneumatique de véhicule comportant au moins une pointe selon l'une ou plusieurs des revendications 1 à 14 dans sa bande de roulement.
